# EUROPÄISCHE PATENTSCHRIFT

(11) **EP 1 301 449 B1**
(45) Veröffentlichungstag und Bekanntmachung des Hinweises auf die Patenterteilung: **29.03.2006**
(21) Anmeldenummer: 01944915.6
(22) Anmeldetag: 08.05.2001
(51) Int. Cl.: C04B 35/462, H01G 4/12

(54) **KERAMIKMASSE UND KONDENSATOR MIT DER KERAMIKMASSE**
CERAMIC MASS AND A CAPACITOR PRODUCED USING A CERAMIC MASS
MASSE CERAMIQUE ET CONDENSATEUR FAIT DE MASSE CERAMIQUE

(30) Priorität: 19.07.2000 DE 10035172
(43) Veröffentlichungstag der Anmeldung: 16.04.2003
(73) Patentinhaber: EPCOS AG, 81669 München (DE)
(72) Erfinder: FELTZ, Adalbert, A-8530 Deutschlandsberg (AT); SEDLMAIER, Peter, A-9113 Ruden (AT)
(74) Vertreter: Epping - Hermann - Fischer
(86) Internationale Anmeldenummer: PCT/DE2001/001739
(87) Internationale Veröffentlichungsnummer: WO 2002/006184

(56) Entgegenhaltungen:
- EP-A- 0 534 802
- EP-A- 0 926 107
- US-A- 5 458 981

## Beschreibung

Die Erfindung betrifft eine Keramikmasse mit einer Keramik und einer Glasfritte und einen Kondensator mit der Keramikmasse.

Es sind Keramikmassen bekannt, die als Dielektrikum für Vielschichtkondensatoren mit Metallelektroden verwendet werden. Als Elektrodenmaterial wird aus Kostengründen Kupfer bevorzugt. Bei der Verwendung von Kupfer als Elektrodenmaterial ist es allerdings notwendig, die Sintertemperatur der Keramikmasse unter die Schmelztemperatur des Kupfers zu reduzieren, da die Vielschichtkondensatoren durch gemeinsame Sinterung der Keramik mit den Elektroden hergestellt werden.

Es sind bereits technische Lösungen bekannt geworden, die die Gemeinsamsinterung einer Keramikmasse mit Cu-Elektroden unter reduzierenden Bedingungen gestatten, wobei die Sintertemperatur unter die Schmelztemperatur des Kupfers (1083°C) abgesenkt ist. Es werden dazu bestimmte Sinterhilfsmittel, vorzugsweise Zusätze von Glasfritten, angewendet, deren stoffliche Basis Bleioxid und/oder Wismutoxid enthaltende Systeme sind. Um die Oxidation des Kupfers während der Sinterung im Bereich von 1000 °C zu unterbinden, muß ein Sauerstoffpartialdruck < 10⁻² Pa angewendet werden. Zugleich darf ein unterer kritischer Grenzwert des Sauerstoffpartialdruck nicht unterschritten werden, da andernfalls die Keramik oder ein Bestandteil der bei der Herstellung zugesetzten Glasfritte der Reduktion unterliegt, was zwangsläufig zur Herabsetzung des Isolationswiderstandes und einer unzulässigen Erhöhung der dielektrischen Verluste führt. Zur Vermeidung einer lokalen Unterschreitung dieses unteren kritischen Grenzwertes muß die Entkohlung der bei der Herstellung verwendeten Grünkörper vor dem Einsetzen der Sinterung vollständig realisiert sein.

In den Druckschriften EP 0 534 802 A1, US 5 264 403, US 5 304 521, US 5 350 721, US 5 479 140, US 5 493 262, US 5 488 019, US 5 485 132 werden Keramikmassen der Stoffsysteme BaO - TiO₂ - (SE)₂O₃ beschrieben, in denen das Oxid der Seltenen Erdmetalle (SE) partiell durch Bi₂O₃ ersetzt sein kann, und deren Sinterverdichtung teilweise bereits bei 900°C dadurch gelingt, daß Glasfrittenanteile, die CdO, PbO oder Bi₂O₃ enthalten, oder auch Gläser des Systems ZnO - B₂O₃ - SiO₂, zugesetzt sind. Dadurch wird eine Gemeinsamsinterung mit Ag-Elektroden an der Luft ermöglicht. Für eine Gemeinsamsinterung mit Kupfer-Elektroden unter Inertbedingungen, z. B. unter Stickstoffatmosphäre, erweisen sich die Systeme gegenüber einer partiellen Reduktion, die eine Herabsetzung des Isolationswiderstandes und Erhöhung der dielektrischen Verluste zur Folge hat, nicht als hinreichend stabil.

In den Druckschriften EP 0 534 801 A1, US 5 458 981 und US 5 292 694 werden gleichfalls BaO - TiO₂ - SE₂O₃ - Keramikmassen in Verbindung mit B₂O₃ und ZnO enthaltenden Glaszusätzen zum Zweck der Gemeinsamsinterung mit Silberelektroden offenbart. Die Entkohlung unter Luftzutritt verhindert auch in diesen Fällen die Kombination mit Kupfer-Elektroden, so daß auf Silber oder Silber/Palladium-Legierungen als Elektrodenmaterial zurückgegriffen werden muß. Dem Vorteil einer kostengünstigen Anwendung von Silber-Elektroden steht der Nachteil der hohen Beweglichkeit von Silber, insbesondere bei hoher Temperatur, gegenüber, der zu Migrationseffekten und einer daraus resultierenden Verschlechterung der dielektrischen Eigenschaften führen kann.

Gemäß der Druckschrift DE 197 49 858 wird das für die Herstellung von COG-Kondensatoren und Mikrowellenresonatoren hoher Dielektrizitätskonstante (DK) genutzte Stoffsystem BaO-PbO-Nd₂O₃-TiO₂ im Bereich der Phasenbildung rhombischer Bronzen (Ba_{1-y}Pb_{y}) ₆₋ₓNd_{8+2x/3}Ti₁₈O₅₄ mit 0,6 < x < 2,1 und 0 < y < 0,6 für eine Sinterung bei Temperaturen < 1030°C und damit für die Gemeinsamsinterung mit Cu-Elektroden dadurch erschlossen, daß Sinterhilfsmittel, vorzugsweise PbO-freie Glasfritten bestimmter Zusammensetzung, zugemischt werden und eine vollständige Entkohlung unter Stickstoff durch Einwirkung von Wasserdampf bei erhöhter Temperatur unter Ausnutzung des aus der Erdölverarbeitung bekannten Steam-Reforming-Prozesses erreicht wird. Zu dieser technischen Lösung ist einschränkend anzumerken, daß die Stabilität der Keramik durch den PbO-Gehalt begrenzt ist, was eine besonders sorgfältige Entkohlung und die äußerst sorgfältige Vermeidung eines zu geringen Sauerstoffpartialdruckes erfordert. Die beiden Forderungen sind miteinander verknüpft, da insbesondere auch lokal die unzulässige Unterschreitung der kritischen Sauerstoffpartialdruckgrenze, verursacht durch geringfügige organische Restbestandteile, vermieden werden muß. Andernfalls bildet sich eine eutektische Pb/Cu - Legierung, die bei 954°C schmilzt, was dazu führt, daß die Elektroden auslaufen.

Um einen solchen Nachteil zu vermeiden, haben sich PbO- und Bi₂O₃-freie Systeme als geeignet erwiesen. In der DE 198 41 487 A1 wurde das PbO-freie Stoffsystem BaO - Nd₂O₃ - SmₐO₃ - TiO₂ im Bereich der Phasenbildung rhombischer Bronzen Ba₆₋ₓ(Sm_{y}Nd_{1-y})_{8+2x/3}Ti₁₈O₅₄ für die Herstellung von COG-Kondensatoren und Mikrowellenresonatoren beschrieben, wobei ein Temperaturkoeffizient der Kapazität TKC < 30 ppm/K bzw. ein Temperaturkoeffizient der Resonanzfrequenz TKν₀ < 10 ppm/K durch geeignete Wahl der Zusammensetzungsparameter x und y gezielt eingestellt und zugleich eine Sinterung bei Temperaturen < 1030°C und damit Gemeinsamsinterung mit Cu-Elektroden erreicht wird, indem man eine Glasfritte geeigneter Zusammensetzung in entsprechender Menge zusetzt. Die Nutzung dieses Vorteils setzt voraus, daß die rhombische Bronze der betreffenden Zusammensetzung als homogene Phase vor der Sinterung vollständig gebildet wird, was die relativ hohe Umsatztemperatur von 1250°C bei der Kalzination der Mischung der Oxidrohstoffe BaCO₃, Nd₂O₃ und TiO₂ erforderlich macht.

Ziel der vorliegenden Erfindung ist es daher, eine für Kondensatoren geeignete Keramikmasse bereit zu stellen, die durch Kalzination bei einer Temperatur von höchstens 1240 °C aus den Oxidrohstoffen herstellbar ist. Ferner soll die Keramikmasse bei einer Temperatur < 1030 °C sinterbar sein und einen niedrigen Temperaturkoeffizienten der Dielektrizitätskonstante aufweisen.

Dieses Ziel wird erfindungsgemäß durch eine Keramikmasse nach Anspruch 1 erreicht. Vorteilhafte Ausgestaltungen der Erfindung und ein Kondensator mit der erfindungsgemäßen Keramikmasse sind den weiteren Ansprüchen zu entnehmen.

Die Erfindung gibt eine Keramikmasse an, die eine phasenheterogene Keramik und einen additiven Zusatz an Glasfritte zur Keramik enthält. Die phasenheterogene Keramik weist m Gewichtsprozent einer ersten und 100 - m Gewichtsprozent einer zweiten Phase auf. Die erste Phase besteht aus BaNd₂Ti₄O₁₂ mit negativem Temperaturkoeffizienten der Dielektrizitätskonstante, während die zweite Phase aus Nd₂Ti₂O₇ mit positivem Temperaturkoeffizienten der Dielektrizitätskonstante besteht. Dabei gilt für den Mischungsparameter m: 50 < m < 70. Die Glasfritte enthält Zinkoxid, Boroxid und Siliziumoxid und hat ein Gewicht, das zwischen 3 und 10 Gewichtsprozent der phasenheterogenen Keramik beträgt.

Neben den genannten Bestandteilen kann die Keramikmasse noch geringe Mengen weiterer üblicher Bestandteile enthalten, die die gewünschten Eigenschaften der Keramik nicht beeinträchtigen.

Die erfindungsgemäße Keramikmasse hat den Vorteil, daß die in ihr enthaltene phasenheterogene Keramik bereits bei einer Temperatur von 1180 °C durch Kalzination aus den Rohstoffen Bariumcarbonat, Neodymoxid und Titanoxid hergestellt werden kann. Durch die vergleichsweise niedrige Kalzinationstemperatur ist die erfindungsgemäße Keramikmasse mit einem geringen Heizaufwand herstellbar. Die erfindungsgemäße Keramikmasse hat ferner den Vorteil, daß sie eine hohe Dielektrizitätskonstante ε > 50 aufweist.

Darüber hinaus hat die erfindungsgemäße Keramikmasse den Vorteil, daß sie bei Temperaturen < 1030 °C sinterbar ist, wodurch die Gemeinsamsinterung mit Kupferelektroden möglich wird.

In einer besonders vorteilhaften Ausführungsform der Erfindung weist die Glasfritte in der Keramikmasse folgende Zusammensetzung auf: (ZnO)_{58,5}(B₂O₃)_{31,45}(SiO₂)_{10,05}.

Ferner gibt die Erfindung einen Kondensator an, bei dem die erfindungsgemäße Keramikmasse als Dielektrikum verwendet wird. Das Dielektrikum bildet einen Grundkörper, der auf zwei gegenüberliegenden Seiten je eine Kontaktschicht aufweist. Die Kontaktschichten sind mit im Inneren des Grundkörpers befindlichen, kammartig ineinandergreifenden Elektroden kontaktiert. Da die in dem Kondensator verwendete Keramikmasse weder Bleioxid noch Wismutoxid enthält, ist die Keramikmasse besonders stabil gegenüber reduzierend wirkenden Einflüssen, so daß der Kondensator den Vorteil einer langzeitstabilen Kapazität hat.

In einer besonders vorteilhaften Ausführungsform des Kondensators bestehen die Elektroden aus Kupfer und sind zusammen mit der Keramikmasse gesintert. Kupfer hat den Vorteil, daß es billig zu beschaffen ist und eine hohe Leitfähigkeit aufweist. Dadurch ist der Kondensator in vorteilhafter Weise im Bereich hoher Frequenzen einsetzbar.

Der erfindungsgemäße Kondensator kann besonders vorteilhaft ausgestaltet sein, indem die Zusammensetzung der Keramik durch geeignete Wahl des Parameters m so eingestellt ist, daß der Temperaturkoeffizient der Kondensatorkapazität die Anforderungen der sogenannten "COG-Charakteristik" erfüllt. Die "COG-Charakteristik" bedeutet, daß der Temperaturkoeffizient der Kapazität ΔC/ΔT eines COG-Kondensators im Temperaturintervall zwischen -55 °C und 125 °C kleiner ist als 30 ppm/K. Da der Temperaturkoeffizient der Kondensatorkapazität im wesentlichen vom Temperaturkoeffizienten der Dielektrizitätskonstante der verwendeten Keramikmasse abhängt, kann durch geeignete Kompensation der Temperaturkoeffizienten der einzelnen Phasen der Keramik eine Minimierung des Temperaturkoeffizienten der Kondensatorkapazität erreicht werden.

Im Stoffsystem BaO - Nd₂O₃ - TiO₂ kann die Verbindung BaNd₂Ti₄O₁₂, deren Temperaturkoeffizient der Dielektrizitätskonstante TKε₁ ca. -120 ppm/K beträgt, mit der Verbindung Nd₂Ti₂O₇, die einen Temperaturkoeffizienten der Dielektrizitätskonstante TKε₂ von ca. +200 ppm/K aufweist, unter Zugrundelegung der Mischungsregel TKε = v₁ TKε₁ + v₂ TKε₂ zu einem heterogenen Phasengemisch kombiniert werden, das für den damit hergestellten Kondensator einen Temperaturkoeffizienten der Kapazität TKC = TKε + α_{L} nahe Null ergibt. Dabei bezeichnet vᵢ den Volumenprozentgehalt der Komponenten und α_{L} den Wert des thermischen Ausdehnungskoeffizienten der Keramikmasse.

Die Sinterung bei Temperaturen < 1030°C, die eine Gemeinsamsinterung mit Cu-Elektroden ermöglicht, wird bei Anwendung einer Inertgasatmosphäre mit hinreichend niedrigem Sauerstoffpartialdruck dadurch erschlossen, daß der Keramik eine Glasfritte genannter Zusammensetzung als Sinterhilfsmittel, zugemischt ist.

Es ist weiterhin von Vorteil, daß auf Grund der Kenntnis der Zusammensetzungsabhängigkeit der TKC - Werte eine durch den Zusatz von Glasfritte bedingte Verschiebung des Temperaturkoeffizienten TKε nach positiven oder negativen Werten mittels einer gezielten Änderung der Zusammensetzung (Wahl des Parameterwertes m) kompensiert werden kann.

Ein Vorteil der Erfindung besteht darin, daß die aus BaNd₂Ti₄O₁₂ und Nd₂Ti₂O₇ bestehende phasenheterogene Mischung aus den Rohstoffen BaCO₃, Nd₂O₃ und TiO₂ bereits bei einer Umsatztemperatur von 1180°C durch Kalzination zugänglich ist und daß die Sinterverdichtung nach der Zugabe eines Anteils einer Glasfritte bei 930°C bis maximal 1030°C in Gegenwart von Cu - Elektroden unter einem Sauerstoffpartialdruck < 10⁻² Pa durchführbar ist, ohne daß die für COG-Kondensatoren typischen Eigenschaften infolge einer partiellen Reduktion eine Beeinträchtigung erfahren.

Die vollständige Entkohlung der im Laufe des Herstellungsverfahrens erzeugten Grünkörper gelingt in einem Temperaturbereich unterhalb des Einsetzens der Sinterverdichtung, indem der aus der Petrochemie bekannte Prozeß des Abbaus von Kohlenwasserstoffen bzw. von davon abgeleiteten organischen Verbindungen zu Kohlendioxid und Wasserstoff durch Einwirkung von Wasserdampf bei erhöhter Temperatur ("Steamcracking") auf den Keramikprozeß übertragen wird. Zum Beispiel läßt sich aus thermodynamischen Daten für den Abbau von Polyethylenglycol oder Polyacrylsäure als Binder gemäß der Reaktion

(-[CH₂-CH₂-O]-)ₙ + 3nH₂O → 2n CO₂ + 5n H₂ 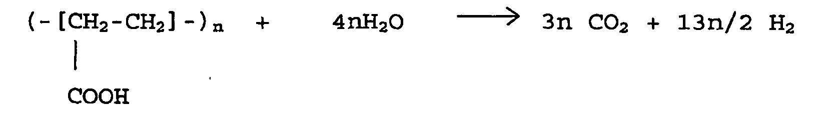 eine geringfügig negative freie Enthalpie abschätzen, so daß der Vorgang der Entkohlung der Grünkörper, der zur Vermeidung einer Oxidation des Kupfers unter Stickstoff (Sauerstoffpartialdruck < 10⁻² Pa) vorgenommen werden muß, vollständig ablaufen kann.

Die Erfindung wird nachfolgend anhand von Ausführungsbeispielen und der dazugehörigen Figur näher erläutert.

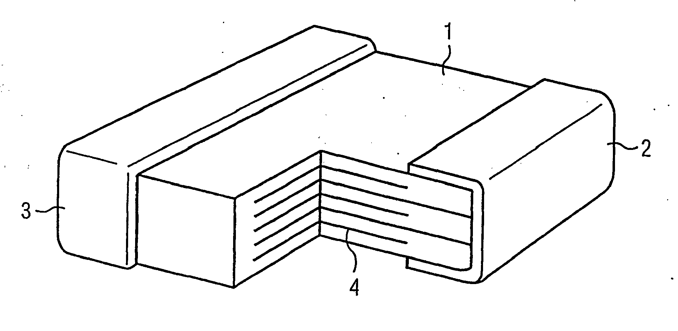

Die Figur zeigt beispielhaft einen erfindungsgemäßen Kondensator in teilweise geschnittener Ansicht.

Die Figur zeigt einen erfindungsgemäßen Kondensator mit einem Grundkörper 1, der auf zwei gegenüberliegenden Seiten je eine Kontaktschicht 2, 3 aufweist. Diese Kontaktschichten 2,3 können aus Kupfer-Einbrennpaste hergestellt sein. Der Grundkörper 1 besteht aus der erfindungsgemäßen Keramikmasse und bildet das Dielektrikum des Kondensators. Innerhalb des Grundkörpers 1 sind kammartig ineinander greifende Elektroden 4 angeordnet, die in vorteilhafterweise aus Kupfer bestehen. Die erfindungsgemäße Keramikmasse ist so beschaffen, daß der Kondensator durch Gemeinsamsinterung der Keramikmasse mit den Kupfer-Elektroden durch Sintern hergestellt werden kann.

Im folgenden ist die Herstellung der erfindungsgemäßen Keramikmasse und der in der Keramikmasse enthaltenen Keramik anhand verschiedener Ausführungsbeispiele beschrieben:

Durch Mischen der pulverförmigen Ausgangsstoffe BaCO₃, Nd₂O₃ und TiO₂ im entsprechenden Molverhältnis und Umsetzen der Mischung bei 1180°C werden die Verbindungen BaNd₂Ti₄O₁₂ und Nd₂Ti₂O₇ als Gemisch erhalten, in dem sich der negative Temperaturkoeffizient der Dielektrizitätskonstante der ersten Verbindung und der positive Temperaturkoeffizient der zweiten Verbindung unter Zugrundelegung der Mischungsregel TKε = v₁ TKε₁ + v₂ TKε₂ mit v₁,v₂ als den Volumenprozenten der beiden Komponenten auf einen Wert nahe Null ergänzen. Auf Grund des Zusammenhangs TKε = -2 TKν₀ - 2 α_{L} ist durch geeignete Wahl der Zusammensetzung ebenso eine Einstellung des Temperaturkoeffizienten der Mikrowellen-Resonanzfrequenz TKν₀ auf einen Wert nahe Null erreichbar, was die Anwendung als Mikrowellenresonator-Keramik ermöglicht.

Um die Gültigkeit der Mischungsregel zu überprüfen, wird das nach dem Umsatz erhaltene Gemenge zunächst ohne Glasfrittenzusatz einem Mahlprozeß unterworfen (mittlere Korngröße ca. 0,6 µm), die erhaltene feinkörnige Pulvermischung anschließend in ein Granulat überführt und letzteres durch Pressen zu scheibenförmigen Proben oder zu für Resonanzmessungen geeigneten zylinderförmigen Körpern verdichtet und diese anschließend bei 1350 bis 1380 °C 6 h lang auf 95 bis 97% der theoretisch möglichen maximalen Dichte gesintert. Nach einer solchen Vorgangsweise sind z. B. scheibenförmige Proben (S) mit einem Durchmesser von 12 mm und einer Höhe von 0,6 mm bzw. zylinderförmige Proben (Z) mit einem Durchmesser von 10 mm und einer Höhe von 6,4 mm zugänglich.

Die scheibenförmigen Proben sind durch Anlegen von Elektroden zur Messung der Dielektrizitätskonstante ε, des Verlustwinkels tan δ bei einer Frequenz von 1 MHz und des Temperaturkoeffizienten TKC der Kapazität eines mit der Keramik gebildeten Kondensators geeignet. Die genannten Meßwerte sind in Tabelle 1 angeführt. Die zylinderförmigen Proben sind geeignet zur Messung des Gütefaktors Qν₀ und des Temperaturkoeffizienten der Resonanzfrequenz TKν₀ eines aus ihnen gebildeten Mikrowellen-Resonators, die beide in Tabelle 1 angegeben sind.

In Tabelle 1 sind die durch Sintern bei hoher Temperatur erhaltenen Keramikproben (S)und (Z) mit den Zusammensetzungen
(1) 54,8 m-% BaNd₂Ti₄O₁₂/45,2 m-% Nd₂Ti₂O₇
(2) 61,4 m-% BaNd₂Ti₄O₁₂/38,6 m-% Nd₂Ti₂O₇
(3) 65, 0 m-% BaNd₂Ti₄O₁₂/35,0 m-% Nd₂Ti₂O₇
angegeben.

Die Masseprozent-Werte (m-%) ergeben sich aus den mit der Mischungsregel abgeschätzten Volumenprozentwerten v₁,v₂ unter Verwendung der Dichte ρ₁ = 5,79 g/cm³ für BaNd₂Ti₄O₁₂ und ρ₂ = 6,05 g/cm³ für Nd₂Ti₂O₇. Die berechneten TKC - Werte (TKC ber.) sind nach der Mischungsregel TKε =Σ₁ vᵢ TKεᵢ (1=1,2) unter Verwendung von TKε₁ = -111 ppm/K für BaNd₂Ti₄O₁₂ und TKε₂ = 217 ppm/K für Nd₂Ti₂O₇ mit der Annahme eines Ausdehnungskoeffizienten der Keramikproben α_{L} = 8 ppm/K gemäß TKC = TKε + α_{L} erhalten worden. Die Temperaturen im Index der TKC - Werte geben das Intervall an, in dem der angegebene TKC - Wert ermittelt wurde.

**Tabelle 1: Eigenschaften von Keramikproben der Zusammensetzung (1) , (2) und (3)**

| Probe | ε | (S) tan δ (1 MHz) | (S) TKC [ppm/K] | TKC_{+25/+125°C} (ber.) [ppm/K] | (Z) Qν₀ [THz] | (Z) TKν_{0+25/+55°C} [ppm/K] |
|---|---|---|---|---|---|---|
| (1) | - | < 1x10⁻³ | 6,3_{-55/25°C} 25_{25/125°C} | 41 | - | - |
| (2) | 62 | 0, 2x10⁻³ | -15-_{55/25°C} 6_{45/125°C} | 20,2 | 4,2 (bei 5,6 GHz) | + 14 |
| (3) | 64 | 0,2×10⁻³ | -14-_{55/25°C} 5_{45/125°C} | 8.5 | 4,5 (bei 5,4 GHz) | + 20 |

Die TKC - Werte sind mit einer Abweichung nach positiven Beträgen ausgewählt worden, um der durch den Zusatz an Glasfritte verursachten Absenkung auf diese Weise Rechnung zu tragen. Die Keramiken gewährleisten auf Grund der Abwesenheit von PbO eine erhöhte Stabilität gegenüber Reduktion bei der Sinterung unter Inertbedingungen, z. B. unter Stickstoffatmosphäre.

Gemeinsamsinterbarkeit mit Kupferelektroden wird erreicht, indem man das bei 1180°C aus den Oxidkomponenten hergestellte Phasengemisch der Verbindungen BaNd₂Ti₄O₁₂ und Nd₂Ti₂O₇ additiv mit 3 bis 10 Gewichtsprozent einer Glasfritte des Systems ZnO - B₂O₃ - SiO₂, vorzugsweise der bestimmten Zusammensetzung (ZnO)_{58,5}(B₂O₃)_{31,45}(SiO₂)_{10,05}, versetzt und die Mischung solange in wäßriger Suspension einem Mahlprozeß unterzieht, bis eine mittlere Korngröße von 0,6 µm bei annähernd monomodaler Verteilung erreicht ist.

Der so erhaltene Schlicker wird nach Filtration und Trocknen unter Zugabe eines Preßhilfsmittels zu einem Granulat weiterverarbeitet, aus dem scheiben- oder zylinderförmige Grünkörper gepreßt werden, oder aber unmittelbar nach der Zugabe eines geeigneten organischen Bindersystems, zu Folien verarbeitet bzw. durch Sprühen in ein preßfähiges Granulat überführt.

Durch Aufbringen von Cu-Paste mittels Siebdruck wird die Folie mit einer für Kondensatoren bestimmter Kapazität und Bauform geeigneten Elektrodenstruktur versehen, so daß nach dem Stapeln, Laminieren und Cutten Grünteile erhalten werden, die der Entkohlung und Sinterung zugeführt werden können. In der Figur ist der Aufbau eines derartigen Vielschichtkondensators wiedergegeben.

Zur Entkohlung sind die Grünkörper in einem Ofen mit kontrollierter Atmosphäre einem Gasstrom von Reinststickstoff (2 bis 5 1/min, Rest-Sauerstoffpartialdruck < 10⁻² Pa) ausgesetzt, dem zwischen 2 und 23 g Wasserdampf pro Stunde zudosiert werden. Zunächst wird auf 400 °C aufgeheizt, 2 h gehalten, anschließend auf 680 bis 750 °C gebracht, wobei die vollständige Entkohlung eine Reaktionszeit bis zu 6 h beansprucht. Anschließend wird die Wasserdampfzufuhr bis auf etwa 1 g/h zurückgenommen und bei 900 bis 1000 °C die Sinterverdichtung durchgeführt.

Die Cu-Außenmetallisierung der Kondensatoren findet, der vorgeschriebenen Einbrennkurve der betreffenden Kupferpaste folgend, in einem gesonderten Prozeßschritt gleichfalls unter Reinststickstoff in Gegenwart von Wasserdampf statt, um eine reduzierende Veränderung der Keramik durch in der Paste enthaltene Binderbestandteile zu vermeiden.

Zur Feststellung der dielektrischen Keramikeigenschaften erweisen sich mit Cu-Elektroden versehene scheibenförmige Proben S (0 12-13 mm, Dicke 0, 6-0, 7 mm) als geeignet.

In Tabelle 2 sind Beispiele von Scheibenproben (S) der erfindungsgemäßen Keramikmassen und von Vielschichtkondensatoren (K) aufgeführt, die auf der Basis der Keramikmassen
(1) 54,8 m-% BaNd₂Ti₄O₁₂/45,2 m-% Nd₂Ti₂O₇
(2) 61,4 m-% BaNd₂Ti₄O₁₂/38,6 m-% Nd₂Ti₂O₇
(3) 65,0 m-% BaNd₂Ti₄O₁₂/35,0 m-% Nd₂Ti₂O₇
(4) 68, 0 m-% BaNd₂Ti₄O₁₂/32,0 m-% Nd₂Ti₂O₇
mit jeweils einem additiven Zusatz von 6 Gewichtsprozent Glasfritte der Zusammensetzung (ZnO)_{58,5} (B₂O₃)_{31,45} (SiO₂)_{10,05} erhalten wurden. Die Proben (S) und (K) sind im Ergebnis einer Gemeinsamsinterung mit Cu-Elektroden hergestellt worden. Von den Vielschichtkondensatoren (K) wurden 24 Stück mit einer Kapazität von 89 ± 1 pF hergestellt.

In der Tabelle 2 sind neben der jeweiligen Sintertemperatur T_{Sinter} und der Sinterzeit t_{Sinter} die relative Dichte δᵣₑₗ. in % bezogen auf die theoretisch maximal erreichbare Dichte als Maß für die Porosität der Proben, der Verlustwinkel tan δ, TKC und der Isolationswiderstand RIs der Keramikproben angeben.

**Tabelle 2: Eigenschaften von Keramikproben (S) und (K) auf der Basis der o.g. Keramikmassen (1) ... (4)**

| Probe | T_{Sinter}/t_{Sinter} | ρᵣₑₗ₋ [%] | ε | tan δ (1MHz) | TKC [ppm/K] | RIs [MΩ] |
|---|---|---|---|---|---|---|
| S (1) | 1000 °C/1 h | | 46 | 0, 4x10⁻³ | 75-_{55/+25°C} 85_{+25/125°C} | >10⁶ |
| S(2) | 975 °C/6 h | 98 | 54 | 0,4x10⁻³ | 6_{-55/+25°C} - 5+_{25/125°C} | >10⁶ |
| S (2) | 950 °C/6 h | 94 | 51 | 0, 6x10⁻³ | 6_{-55/+25°C} -4_{+25/125°C} | >10⁶ |
| S (2) | 930 °C/6 h | 97 | 53 | 0, 5x10⁻³ | 7_{-55/+25°C} -2_{+25/125°C} | 3x10⁵ |
| S(2) | 1000 °C/1 h | 97 | 46 | 0,4×10⁻³ | -10_{-55/+25°C} - 10_{+25/125°C} | >10⁶ |
| S (3) | 975 °C/6 h | 96 | 58 | 0,6×10⁻³ | -13_{-55/+25°C} -11_{+25/125°C} | >10⁶ |
| S (3) | 950 °C/6 h | 98 | 55 | 0,6×10⁻³ | -6_{-55/+25°C} -15_{+25/125°C} | >10⁶ |
| S (3) | 930 °C/6 h | 97 | 55 | 0,4×10⁻³ | -15_{-55/+25°C} -36_{+25/125°C} | 2x10⁵ |
| K(4) | 1000 °C/3 h | | | 0,4×10⁻³ | 5_{+25/+125°C} | 2×10⁷ |

Die Proben S(2) und S(3) verdeutlichen, daß die Zumischung von 6% der Glasfritte zur Keramikmasse bereits ab 950°C eine hinreichende Sinterverdichtung in Gegenwart von Cu-Elektroden ermöglicht und die an eine COG-Kondensatorkeramik gestellten Materialeigenschaften erfüllt werden.

Die Erfindung beschränkt sich nicht auf die dargestellten Ausführungsbeispiele sondern wird in ihrer allgemeinsten Form durch Patentanspruch 1 definiert.

## Patentansprüche

1. Keramikmasse
- mit einer phasenheterogenen Keramik, aufweisend m Gewichtsprozent einer Phase aus BaNd₂Ti₄O₁₂ mit negativem Temperaturkoeffizienten der Dielektrizitätskonstante und 100 - m Gewichtsprozent einer Phase aus Nd₂Ti₂O₇ mit positivem Temperaturkoeffizienten der Dielektrizitätskonstante, wobei gilt:
50 < m < 70, und
- mit einem Zusatz an Glasfritte, die ZnO, B₂O₃ und SiO₂ enthält und dessen Gewicht zwischen 3 und 10 Gewichtsprozent der Keramik beträgt.

2. Keramikmasse nach Anspruch 1,
bei der die Glasfritte die Zusammensetzung (ZnO)_{58,5}(B₂O₃)_{31,45}(SiO₂)_{10,05} aufweist.

3. Kondensator mit einem Grundkörper (1) als Dielektrikum, der eine Keramikmasse gemäß Anspruch 1 oder 2 umfaßt und der auf zwei gegenüberliegenden Seiten je eine Kontaktschicht (2, 3) aufweist, die mit im Innern des Grundkörpers (1) befindlichen, kammartig ineinandergreifenden Elektroden (4) kontaktiert sind.

4. Kondensator nach Anspruch 3,
bei dem die Elektroden (4) aus Kupfer bestehen und zusammen mit der Keramikmasse gesintert sind.

5. Kondensator nach Anspruch 3 oder 4,
bei dem die Zusammensetzung der Keramik so gewählt ist, daß der Temperaturkoeffizient der Kondensatorkapazität im Temperaturintervall zwischen -55 °C und 125 °C kleiner ist als 30 ppm/Kelvin.

## Claims

1. Ceramic mass
- having a phase-heterogeneous ceramic, which includes m per cent by weight of a phase made up of BaNd₂Ti₄O₁₂ with a negative temperature coefficient of the dielectric constant and 100 - m per cent by weight of a phase made up of Nd₂Ti₂O₇ with a positive temperature coefficient of the dielectric constant, where:
50 < m < 70, and
- having an addition of glass frit, which contains ZnO, B₂O₃ and SiO₂ and the weight of which amounts to between 3 and 10 per cent by weight of the ceramic.

2. Ceramic mass according to Claim 1, in which the glass frit has the composition
(ZnO)_{58.5} (B₂O₃)_{31.45}(SiO₂)_{10.05}

3. Capacitor having a base body (1) as dielectric, which comprises a ceramic mass according to Claim 1 or 2 and on each of two opposite sides has a contact layer (2, 3), which contact layers are contact-connected to interdigitated electrodes (4) located in the interior of the base body (1).

4. Capacitor according to Claim 3, in which the electrodes (4) consist of copper and are sintered together with the ceramic mass.

5. Capacitor according to Claim 3 or 4, in which the composition of the ceramic is selected in such a way that the temperature coefficient of the capacitor capacitance in the temperature range between -55°C and 125°C is lower than 30 ppm/Kelvin.

## Revendications

1. Composition de céramique
- comprenant une céramique à hétérogénéité de phase et ayant m pourcents en poids d'une phase en BaNd₂Ti₄O₁₂ à coefficient négatif de variation de la constante diélectrique en fonction de la température et 100 - m pourcents en poids d'une phase en Nd₂Ti₂O₇ à coefficient positif de variation de la constante diélectrique en fonction de la température avec :
50 < m < 70, et
- comprenant une addition de fritte de verre, qui contient du ZnO, du B₂O₃ et du SiO₂ et dont le poids représente entre 3 et 10 % en poids de la céramique.

2. Composition de céramique suivant la revendication 1,
dans laquelle la fritte de verre a la composition (ZnO) _{58,5} (B₂O₃) _{31,45}(SiO₂)_{10,05}.

3. Condensateur ayant un corps (1) de base comme diélectrique, qui comprend une composition de céramique suivant la revendication 1 ou 2 et qui a sur deux faces opposées, respectivement, une couche (2, 3) de contact, lesquelles sont mises en contact avec des électrodes (4) se trouvant à l'intérieur du corps (1) de base et s'interpénétrant à la manière d'un peigne.

4. Condensateur suivant la revendication 3, dans lequel les électrodes (4) sont en cuivre et sont frittées ensemble avec la composition de céramique.

5. Condensateur suivant la revendication 4 ou 5, dans lequel la composition de la céramique est choisie de sorte que le coefficient de variation de la capacité du condensateur en fonction de la température dans l'intervalle de température compris entre -55°C et 125°C est plus petit que 30 ppm/Kelvin.
